# EUROPEAN PATENT SPECIFICATION

(11) **EP 2 857 249 B1**
(45) Date of publication and mention of the grant of the patent: **28.03.2018**
(21) Application number: 13382382.3
(22) Date of filing: 01.10.2013
(51) Int. Cl.: B60K 35/00, B60R 16/023, B60W 40/09, B60W 50/14, G09B 9/052

(54) **Method for displaying information pertaining to efficient driving of a motor vehicle**
Verfahren zur Anzeige von Informationen im Zusammenhang mit effizientem Fahren eines Kraftfahrzeugs
Procédé pour afficher des informations concernant l'efficacité de conduite d'un véhicule automobile

(43) Date of publication of application: 08.04.2015
(73) Proprietor: Seat, S.A., 08760 Martorell (ES)
(72) Inventor: Baños, Victor Baños, 08860 Barcelona (ES); Arasa Gaspar, Anna, 08024 Barcelona (ES); Rodriguez Bosch, Rubén, 08230 Barcelona (ES); Molina Martínez, Daniel, 08028 Barcelona (ES)
(74) Representative: Isern-Jara, Nuria

(56) References cited:
- WO-A1-2012/132541
- DE-A1- 10 056 756
- DE-A1-102008 055 656

## Description

### OBJECT OF THE INVENTION

The patent application herein relates to a method for displaying information pertaining to consumption efficient driving of a motor vehicle according to claim 1 that incorporates significant innovations and advantages.

In addition, this patent application also relates to a device for displaying information pertaining to consumption efficient driving of a motor vehicle according to claim 7.

### BACKGROUND OF THE INVENTION

The screen of the motor vehicle in the centre console of a vehicle is usually used as a device for displaying information, such that the user can consult the data available for said motor vehicle.

The screen of the motor vehicle is usually located on the instrument panel of the motor vehicle or in the centre console, therefore being available to both the driver of the vehicle and the passenger, and can be viewed by both one or the other. Said method of displaying the vehicle information is usually used for adjusting driver assistance variables, and also for navigation systems, for multimedia and/or telematics. Additionally, and given the increasing importance of efficient, and therefore, ecological driving, motor vehicles incorporate the feature of giving instructions or advice to the drivers, thereby enabling them to drive more efficiently.

It is known from the state of the art, as per document US20070112475, a method and corresponding display device, for managing the energy consumption of a motor vehicle, and therefore for optimising the energy consumption of the motor vehicle. The devices and systems for managing the vehicle's energy consumption typically include energy management logic which can calculate a power applied by the vehicle engine on the basis of the information provided from the external environment of the vehicle, the operating state of the vehicle, one or more commands or inputs by a driver, and one or more vehicle operating parameters.

It is also known from the state of the art, as per document WO 2012/132541 A1, that shows the features of the preamble of claim 1, a driving assistance device provided with a display unit which displays: an energy consumption map which indicates the distribution of energy consumption during vehicle travel; an icon which indicates, on the energy consumption map, the current energy consumption of the vehicle as identified from the speed of the vehicle and the acceleration/deceleration of the vehicle; and a direction stipulation display unit which stipulates movement directions of the icon. Then, the energy consumption map displays an eco region on the display unit with a color differing from the other regions, said eco region being a region in which energy consumption is lower than a predetermined value.

It is also known from the state of the art, as per document DE102008055656A1, a device that displays, calculates and stores an individual value and an average value of a measured positive or negative acceleration characteristic i.e. braking characteristic, of single or multiple trips. The device evaluates the individual value and the average value using value judgment by output signals or switching impulses. The device requests a vehicle driver in a didactic manner, to limit a high deceleration value by brakes during a continuous trip or a subsequent trip. The device produces the value judgment by acoustic signals or mathematical techniques.

It is also known from the state of the art, as per document DE10056756A1, a method in which driving style information is recorded and driving technique parameters by comparison with reference values. The reference values are obtained by using driving style information from vehicles in the surroundings of the vehicle concerned. A mathematical averaging process is used to calculate the reference value. Only those vehicles traveling in the same direction or of the same class may be selected.

Therefore, there is still a need to present information related to the decrease in driving consumption efficiency in a highly visual and intuitive manner.

### DESCRIPTION OF THE INVENTION

According to the invention herein, this object is achieved by a method and a device for displaying information pertaining to consumption efficient driving of a motor vehicle according to independent claims 1 and 9. Additional advantages of the invention are presented in the dependent claims of the accompanying description below.

In the present invention, the information is displayed such that it is very easily comprehensible and, therefore, losing focus in respect of road conditions is minimised. Therefore, the information is displayed such that the driver can intuitively and quickly read the display and understand it, requiring minimum time to handle such information, even more so, taking into account the increase in the variables currently available to the user.

In particular, the driver receives graphical information on the more or less abrupt variations in vehicle speed, aiming to avoid harsh accelerating or heavy braking, which lead to less consumption efficient driving.

According to the invention, the method for displaying information pertaining to consumption efficient driving of a motor vehicle comprises:
- an image is displayed on a graphical display device by means of a control device,
- said image comprises a main graphical element which moves away from a position of equilibrium at a distance proportional to a variation in vehicle speed.
Therefore, the magnitude of the displacement of the main graphical element relative to a position of equilibrium is based on the degree of acceleration said motor vehicle undergoes, whether positive or negative, either due to harshly accelerating or heavily braking. The driver therefore receives a reliable impression at all times of how far the driving has shifted in respect of what would be optimal and ecologically efficient driving, even transmitting a visual sensation of inertia on the main graphical element present in the graphical display device or screen.

More specifically, the main graphical element moves in one direction or the opposite direction based on the sign for variation in vehicle speed, adding a further degree of detail to the intuitiveness and visual effect.

According to the invention, the control device displays the main graphical element as a motor vehicle on the graphical display device, seen from behind, on a road in perspective, thereby giving a visual impression of reality.

Advantageously, the control device displays the position of equilibrium on the graphical display device as a highlighted area on the road in perspective, corresponding to the middle zone, and wherein the motor vehicle remains if the driver does not accelerate or brake. Said highlighted area is understood to be the position in which the driver must drive the motor vehicle in order to drive efficiently. According to the invention, when the speed increases, the control device displays the main graphical element moving on the graphical display device, such that it moves backwards relative to the perspective from the position of equilibrium. On the other hand, when the speed decreases, the control device displays the main graphical element moving on the graphical display device, such that it moves forward relative to the perspective from the position of equilibrium. In this way, a further degree of a having a visual impression of reality is added, given that the movement of the main graphical element on the graphical display device would be the same as the movement of a physical object inside the motor vehicle when it accelerates or brakes. Efficient driving is understood as a driving practice in which the fuel and/or electricity consumption of the motor vehicle are as low as possible, resulting in cost savings and a reduction in pollutant emissions.

According to another aspect of the invention, on at least one side of the road in perspective, there is at least one auxiliary graphical element which moves accompanying the main graphical element when its moves. In this way, a further degree of precision is provided such that the user can determine how the position of the main graphical element, or image of a motor vehicle coincides with the position of equilibrium, or optimal position in respect of efficient driving.

More specifically, at least one auxiliary graphical element is a bar that is essentially parallel to the road in perspective, being of a similar length to the highlighted area of the position of equilibrium, which provides a further degree of precision in that the user can determine how the position of the main graphical element, or image of a motor vehicle coincides with the position of equilibrium, or optimal position in respect of efficient driving.

According to another aspect of the invention, the image displayed on the graphical display device comprises at least one additional graphical element that shows the magnitude of the variation in vehicle speed accumulated in a predetermined time. In this way, the driver not only receives a detailed impression of whether the driving task is moving away from optimal efficiency, but can also view previous data and gauge whether the driving is increasing or decreasing in efficiency.

According to another aspect of the invention, the control device stores the variation in speed for a predetermined period and compares it to a predetermined level. In this way, the driver is informed about whether the driving task is within the desired efficiency margins, and may be rated more or less positively based on how it adjusts to each of the predetermined levels, making it easier for the user to quickly comprehend the information.

The invention further relates to a device for displaying information pertaining to efficient driving of a motor vehicle, which comprises at least one control device, and at least one graphical display device wherein an image is displayed, configured such that the main graphical element of said image moves away from a position of equilibrium at a distance proportional to a variation in vehicle speed. Thus, the magnitude of the displacement of the main graphical element relative to a position of equilibrium is based on the degree of acceleration said motor vehicle undergoes, whether positive or negative, either due to harshly accelerating or heavily braking. The driver therefore receives a reliable impression at all times of how far the driving has shifted in respect of what would be optimal and ecologically efficient driving, even transmitting a visual sensation of inertia on the main graphical element present in the graphical display device or screen.

More specifically, the control device is configured to move the main graphical element in one direction or the opposite direction based on the sign for variation in vehicle speed, adding a further degree of detail to the intuitiveness and visual effect.

According to another aspect of the invention, the graphical display device is a screen of the motor vehicle or a screen of an external electronic device. Said flexibility has the added advantage of the vehicle not necessarily requiring a screen, but an external electronic device can be used, which are in widespread use nowadays, which, in some cases, have sensors that can measure accelerations, which can be used as an alternative to those in the motor vehicle itself.

According to another aspect of the invention, the means for detecting the speed variation is a positioning system of the motor vehicle or the external electronic device, wherein said means can be used as an alternative to sensors that can measure acceleration in the motor vehicle itself.

The accompanying drawings show, by way of non-limiting example, a method and an associated device for displaying information pertaining to consumption efficient driving of a motor vehicle, formed according to the invention. Other characteristics and advantages of the aforementioned method and associated device, for displaying information pertaining to consumption efficient driving of a motor vehicle, object of the invention herein, will become apparent from the description of a preferred, although not exclusive embodiment, which is illustrated by way of non-limiting example in the drawings appended, in which:

### BRIEF DESCRIPTION OF THE DRAWINGS

Figure 1.- General front, perspective view of the motor vehicle interface with the user at the dashboard, according to the invention herein;
Figure 2.- Schematic representation of the components and systems involved in the development of the invention herein;
Figure 3A.- View of a method for displaying the image of the motor vehicle, the main and auxiliary graphical element in a position of equilibrium, according to the invention herein;
Figure 3B.- View of a method for displaying the image of the motor vehicle, the main and auxiliary graphical element in a forward position relative to its position of equilibrium, due to the speed of the motor vehicle decreasing, according to the invention herein;
Figure 3C.- View of a method for displaying the image of the motor vehicle, the main and auxiliary graphical element in a rear position relative to its position of equilibrium, due to the speed of the motor vehicle increasing, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

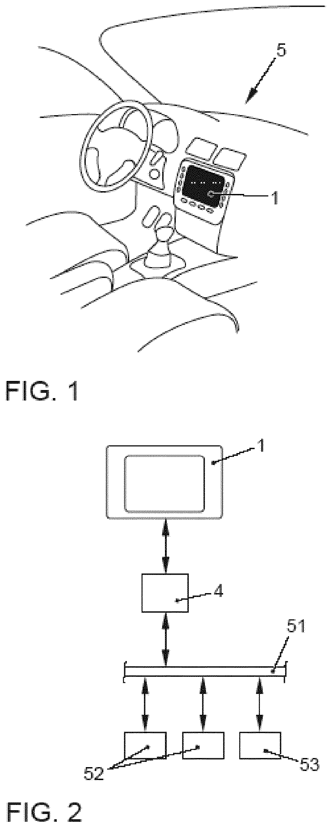

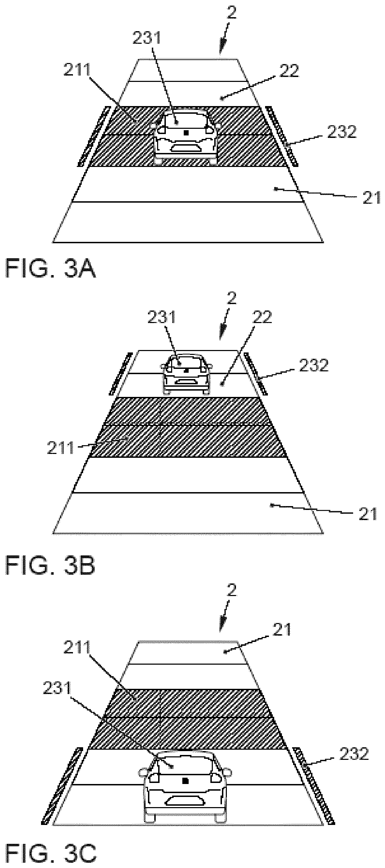

Thus, as seen in Figures 2 and 3A to 3C, the method for displaying information pertaining to consumption efficient driving of a motor vehicle 5, comprises an image which is displayed 2 on a graphical display device 1 by means of a control device 4, said image 2 comprising a main graphical element 231 that moves away from a position of equilibrium 22 at a distance proportional to a variation in vehicle speed 5.

More specifically, as seen in Figures 3A to 3C, the main graphical element 231 moves in one direction or the opposite direction based on the sign for variation in vehicle speed 5.

On the other hand, as seen in Figures 3A to 3C, the control device 4 preferably displays the main graphical element 231 on the graphical display device 1 as a motor vehicle 5, seen from behind, on a road 21 in perspective, in a straight line depending on the gear the motor vehicle is in 5.

According to another aspect of the invention, and as seen in Figures 3A to 3C, the control device 4 displays the position of equilibrium 22 on the graphical display device 1 as a highlighted area 211 on the road 21 in perspective.

In a preferred embodiment of the invention and as seen in Figures 3A to 3C, when the speed increases, the control device 4 displays the main graphical element 213 moving on the graphical display device 1, such that it moves backwards relative to the perspective from the position of equilibrium 22. By contrast, when the speed decreases, the control device 4 displays the main graphical element 213 moving on the graphical display device 1, such that it moves forward relative to the perspective from the position of equilibrium 22.

According to another aspect of the invention, and as seen in Figures 3A to 3C, on at least one side of the road 21 in perspective, there is at least one auxiliary graphical element 232 which moves accompanying the main graphical element 231 when its moves. Specifically, at least one auxiliary graphical element 232 is a bar that is essentially parallel to the road 21 in perspective. There are preferably two of the aforementioned bars and they are, in addition, a similar length to the highlighted area 211 (highlighted in blue for example) of the position of equilibrium 22. Said bars on both sides of the road move while accompanying the motor vehicle 5 to clearly highlight the position thereof on the road 21, either on the highlighted area 211 or outside of it.

According to another aspect of the invention, the image displayed on the graphical display device 1 comprises at least one additional graphical element that shows the magnitude of the variation in vehicle speed accumulated in a predetermined time.

According to yet another aspect of the invention, the control device 4 stores the variation in speed for a predetermined period and compares it to a predetermined level.

In respect of the device for displaying information pertaining to efficient driving of a motor vehicle 5 as seen in Figures 2 and 3A to 3C, this comprises at least one control device 4, and at least one graphical display device 1 wherein an image is displayed 2, and is configured such that the main graphical element 231 of said image 2 moves away from a position of equilibrium 22 at a distance proportional to a variation in vehicle speed 5.

More specifically, and as seen in Figures 3A to 3C, the control device 4 is configured to move the main graphical element 231 in one direction or the opposite direction based on the sign for variation in vehicle speed 5.

According to another aspect of the invention and as seen in Figure 1, the graphical display device 1 is a screen of the motor vehicle 5 or a screen of an external electronic device.

According to yet another aspect of the invention, and as seen in Figure 2, the device for displaying information pertaining to efficient driving of a motor vehicle 5 comprises means for detecting the speed variation 53 inside the motor vehicle 5 or inside an external electronic device. Therefore, and according to one embodiment, accelerations and/or inertia are detected by the internal accelerometers of the motor vehicle 5 (for example those used for sensorising the deployment of the airbag) or by the accelerometers of the external electronic device (for example, a smartphone). In the case of the external electronic device, and in one particular embodiment, the accelerometers adapt the screen in a vertical or horizontal direction when the smartphone is pointed in either direction.

According to yet another aspect of the invention, and as seen in Figure 2, the device for displaying information pertaining to efficient driving of a motor vehicle 5 comprises means for detecting the speed variation 53 that is a positioning system of the vehicle 5 or the external electronic device. Acceleration can be calculated from the speed, which is taken in this particular embodiment from the vehicle's instruments 5 or from the GPS readings (global positioning system) of the mobile device (external GPS or smartphone with GPS).

The details, shapes and dimensions and other accessory elements as well as the components used in the implementation of the aforementioned method, and associated device for displaying information pertaining to consumption efficient driving of a motor vehicle may be conveniently replaced by others which are technically equivalent and do not depart neither from the essential nature of the invention nor from the scope defined by the claims contained in the list hereinafter.

### List of numerical references:

- (1): Graphical display device (motor vehicle interface screen)
- (2): Image
- (21): Road
- (211): Highlighted area
- (22): Position of equilibrium
- (231): Main graphical element (motor vehicle)
- (232): Auxiliary graphical element (bars)
- (4): Control device (onboard computer)
- (5): Motor vehicle
- (51): Internal communication channel of the motor vehicle
- (52): Other systems in the motor vehicle
- (53): Speed variation detection means

## Claims

1. A method for displaying information pertaining to consumption efficient driving of a motor vehicle (5), wherein an image is displayed (2) on a graphical display device (1) by means of a control device (4), said image (2) comprises a main graphical element (231) that moves away from a position of equilibrium (22) at a distance proportional to a variation in vehicle speed (5), wherein the main graphical element (231) moves in one direction or the opposite direction based on the sign for variation in vehicle speed (5), **characterized in that** the control device (4) displays the main graphical element (231) on the graphical display device (1) as a motor vehicle (5) seen from behind, on a road (21) in perspective, and **in that** when the speed increases, the control device (4) displays the main graphical element (231) moving on the graphical display device (1), such that it moves backwards relative to the perspective from the position of equilibrium (22), and **in that** when the speed decreases, the control device (4) displays the main graphical element (213) moving on the graphical display device (1), such that it moves forward relative to the perspective from the position of equilibrium (22).

2. A method according to claim 1, **characterized in that** the control device (4) displays the position of equilibrium (22) on the graphical display device (1) as a highlighted area (211) on the road (21) in perspective.

3. A method according to claim 2, **characterized in that** on at least one side of the road (21) in perspective, there is at least one auxiliary graphical element (232) which moves accompanying the main graphical element (231) when its moves.

4. A method according to claim 3, **characterized in that** at least one auxiliary graphical element (232) is a bar that is essentially parallel to the road (21) in perspective.

5. A method according to claim 1, **characterized in that** the image displayed on the graphical display device (1) comprises at least one additional graphical element that shows the magnitude of the variation in vehicle speed accumulated in a predetermined time.

6. A method according to claim 1, **characterized in that** the control device (4) stores the variation in speed for a predetermined period and compares it to a predetermined level.

7. A device for displaying information pertaining to consumption efficient driving of a motor vehicle (5) which comprises at least one control device (4), and at least one graphical display device (1) wherein an image is displayed (2), configured such that a main graphical element (231) moves away from a position of equilibrium (22) at a distance proportional to a variation in vehicle speed (5), the main graphical element (231) moves in one direction or the opposite direction based on the sign for variation in vehicle speed (5), **characterized in that** the control device (4) displays the main graphical element (231) on the graphical display device (1) as a motor vehicle (5) seen from behind, on a road (21) in perspective, and **in that** when the speed increases, the control device (4) displays the main graphical element (231) moving on the graphical display device (1), such that it moves backwards relative to the perspective from the position of equilibrium (22), and **in that** when the speed decreases, the control device (4) displays the main graphical element (213) moving on the graphical display device (1), such that it moves forward relative to the perspective from the position of equilibrium (22).

8. A device according to claim 7, **characterized in that** the graphical display device (1) is a screen of the motor vehicle (5) or a screen of an external electronic device.

9. A device according to claim 7, **characterized in that** it comprises means for detecting the speed variation (53) inside the motor vehicle (5) or inside an external electronic device.

10. A device according to claim 7, **characterized in that** the means for detecting the speed variation (53) is a positioning system of the vehicle (5) or the external electronic device.

## Patentansprüche

1. Verfahren zum Anzeigen von Informationen, die sich auf verbrauchseffizientes Fahren eines Motorkraftfahrzeuges (5) beziehen, wobei ein Bild auf einer grafischen Anzeigevorrichtung (1) mittels einer Steuerungsvorrichtung (4) angezeigt wird (2), wobei das Bild (2) ein grafisches Hauptelement (231) umfasst, das sich von einer Position des Gleichgewichts (22) in einer Entfernung proportional zu einer Veränderung der Kraftfahrzeuggeschwindigkeit (5) weg bewegt, wobei sich das grafische Hauptelement (231) auf der Grundlage des Zeichens für Veränderung der Kraftfahrzeuggeschwindigkeit (5) in eine einzige Richtung oder die entgegengesetzte Richtung bewegt, **dadurch gekennzeichnet, dass** die Steuerungsvorrichtung (4) das grafische Hauptelement (231) auf der grafischen Anzeigevorrichtung (1) als ein von hinten zu sehendes Motorkraftfahrzeug (5) auf einer Straße (21) in der Perspektive anzeigt, und dadurch, dass, wenn sich die Geschwindigkeit erhöht, die Steuerungsvorrichtung (4) das grafische Hauptelement (231) als sich auf der grafischen Anzeigevorrichtung (1) dergestalt bewegend anzeigt, dass es sich im Verhältnis zu der Perspektive von der Position des Gleichgewichts (22) rückwärts bewegt, und dadurch, dass, wenn die Geschwindigkeit abnimmt, die Steuerungsvorrichtung (4) das grafische Hauptelement (213) als sich auf der grafischen Anzeigevorrichtung (1) dergestalt bewegend anzeigt, dass es sich im Verhältnis zu der Perspektive von der Position des Gleichgewichts (22) vorwärts bewegt.

2. Verfahren nach Anspruch 1, **dadurch gekennzeichnet, dass** die Steuerungsvorrichtung (4) die Position des Gleichgewichts (22) auf der grafischen Anzeigevorrichtung (1) als einen hervorgehobenen Bereich (211) auf der Straße (21) in der Perspektive anzeigt.

3. Verfahren nach Anspruch 2, **dadurch gekennzeichnet, dass** in der Perspektive auf mindestens einer Seite der Straße (21) mindestens ein grafischen Hilfselement (232) vorhanden ist, welches sich als das grafische Hauptelement (231) begleitend bewegt, wenn sich dieses bewegt.

4. Verfahren nach Anspruch 3, **dadurch gekennzeichnet, dass** es sich bei mindestens einem grafischen Hilfselement (232) um einen Balken handelt, der im Wesentlichen in der Perspektive parallel zu der Straße (21) verläuft.

5. Verfahren nach Anspruch 1, **dadurch gekennzeichnet, dass** das Bild, das auf der grafischen Anzeigevorrichtung (1) angezeigt wird, mindestens ein zusätzliches grafisches Element umfasst, das die Größenordnung der Veränderung der Kraftfahrzeuggeschwindigkeit kumuliert in einer zuvor festgelegten Zeit zeigt.

6. Verfahren nach Anspruch 1, **dadurch gekennzeichnet, dass** die Steuerungsvorrichtung (4) die Veränderung der Geschwindigkeit für einen zuvor festgelegten Zeitraum speichert und ihn mit einem zuvor festgelegten Niveau vergleicht.

7. Vorrichtung zum Anzeigen von Informationen, die sich auf verbrauchseffizientes Fahren eines Motorkraftfahrzeuges (5) beziehen, welche mindestens eine Steuerungsvorrichtung (4) und mindestens eine grafische Anzeigevorrichtung (1) umfasst, wobei ein Bild angezeigt wird (2), dergestalt ausgestaltet, dass sich ein grafisches Hauptelement (231) von einer Position des Gleichgewichts (22) in einer Entfernung proportional zu einer Veränderung der Kraftfahrzeuggeschwindigkeit (5) weg bewegt, wobei sich das grafische Hauptelement (231) in eine einzige Richtung oder in die entgegengesetzte Richtung auf der Grundlage des Zeichens für Veränderung der Kraftfahrzeuggeschwindigkeit (5) bewegt, **dadurch gekennzeichnet, dass** die Steuerungsvorrichtung (4) das grafische Hauptelement (231) auf der grafischen Anzeigevorrichtung (1) als ein von hinten zu sehendes Motorkraftfahrzeug (5) auf einer Straße (21) in der Perspektive anzeigt, und dadurch, dass, wenn sich die Geschwindigkeit erhöht, die Steuerungsvorrichtung (4) das grafische Hauptelement (231) als sich auf der grafischen Anzeigevorrichtung (1) dergestalt bewegend anzeigt, dass es sich im Verhältnis zu der Perspektive von der Position des Gleichgewichts (22) rückwärts bewegt, und dadurch, dass, wenn die Geschwindigkeit abnimmt, die Steuerungsvorrichtung (4) das grafische Hauptelement (213) als sich auf der grafischen Anzeigevorrichtung (1) dergestalt bewegend anzeigt, dass es sich im Verhältnis zu der Perspektive von der Position des Gleichgewichts (22) vorwärts bewegt.

8. Vorrichtung nach Anspruch 7, **dadurch gekennzeichnet, dass** es sich bei der grafischen Anzeigevorrichtung (1) um einen Bildschirm des Motorkraftfahrzeuges (5) oder einen Bildschirm einer externen elektronischen Vorrichtung handelt.

9. Vorrichtung nach Anspruch 7, **dadurch gekennzeichnet, dass** sie Mittel zum Detektieren der Geschwindigkeitsveränderung (53) innerhalb des Motorkraftfahrzeuges (5) oder innerhalb einer externen elektronischen Vorrichtung umfasst.

10. Vorrichtung nach Anspruch 7, **dadurch gekennzeichnet, dass** es sich bei den Mitteln zum Detektieren der Geschwindigkeitsveränderung (53) um ein Positionierungssystem des Kraftfahrzeuges (5) oder die externe elektronische Vorrichtung handelt.

## Revendications

1. Procédé d'affichage d'informations concernant la conduite à consommation efficace d'un véhicule à moteur (5), une image étant affichée (2) sur un dispositif d'affichage graphique (1) au moyen d'un dispositif de commande (4), ladite image (2) comprenant un élément graphique principal (231) qui s'éloigne d'une position d'équilibre (22) à une distance proportionnelle à une variation de la vitesse du véhicule (5), l'élément graphique principal (231) se déplaçant dans une direction ou dans la direction opposée sur la base de la variation du signe de la vitesse du véhicule (5), **caractérisé en ce que** le dispositif de commande (4) affiche l'élément graphique principal (231) sur le dispositif d'affichage graphique (1) en tant que véhicule à moteur (5) vu depuis l'arrière, sur une route (21) en perspective, et **en ce que** lorsque la vitesse augmente, le dispositif de commande (4) affiche l'élément graphique principal (231) se déplaçant sur le dispositif d'affichage graphique (1), de telle sorte qu'il se déplace vers l'arrière par rapport à la perspective à partir de la position d'équilibre (22), et **en ce que** lorsque la vitesse diminue, le dispositif de commande (4) affiche l'élément graphique principal (213) se déplaçant sur le dispositif d'affichage graphique (1), de telle sorte qu'il se déplace vers l'avant par rapport à la perspective à partir de la position d'équilibre (22).

2. Procédé selon la revendication 1, **caractérisé en ce que** le dispositif de commande (4) affiche la position d'équilibre (22) sur le dispositif d'affichage graphique (1) en tant que zone mise en évidence (211) sur la route (21) en perspective.

3. Procédé selon la revendication 2, **caractérisé en ce que**, sur au moins un côté de la route (21) en perspective, il y a au moins un élément graphique auxiliaire (232) qui se déplace en accompagnant l'élément graphique principal (231) lorsqu'il se déplace.

4. Procédé selon la revendication 3, **caractérisé en ce qu'**au moins un élément graphique auxiliaire (232) est une barre sensiblement parallèle à la route (21) en perspective.

5. Procédé selon la revendication 1, **caractérisé en ce que** l'image affichée sur le dispositif d'affichage graphique (1) comprend au moins un élément graphique supplémentaire qui montre l'amplitude de la variation de la vitesse du véhicule accumulée dans un temps prédéterminé.

6. Procédé selon la revendication 1, **caractérisé en ce que** le dispositif de commande (4) stocke la variation de vitesse pendant une période prédéterminée et la compare à un niveau prédéterminé.

7. Dispositif d'affichage d'informations concernant la conduite à consommation efficace d'un véhicule à moteur (5), qui comprend au moins un dispositif de commande (4) et au moins un dispositif d'affichage graphique (1) dans lequel une image est affichée (2), configuré de telle sorte qu'un élément graphique principal (231) s'éloigne d'une position d'équilibre (22) à une distance proportionnelle à une variation de la vitesse du véhicule (5), l'élément graphique principal (231) se déplaçant dans une direction ou dans la direction opposée sur la base de la variation du signe de la vitesse du véhicule (5), **caractérisé en ce que** le dispositif de commande (4) affiche l'élément graphique principal (231) sur le dispositif d'affichage graphique (1) en tant que véhicule à moteur (5) vu depuis l'arrière, sur une route (21) en perspective, et **en ce que** lorsque la vitesse augmente, le dispositif de commande (4) affiche l'élément graphique principal (231) se déplaçant sur le dispositif d'affichage graphique (1), de telle sorte qu'il se déplace vers l'arrière par rapport à la perspective à partir de la position d'équilibre (22), et **en ce que** lorsque la vitesse diminue, le dispositif de commande (4) affiche l'élément graphique principal (213) se déplaçant sur le dispositif d'affichage graphique (1), de telle sorte qu'il se déplace vers l'avant par rapport à la perspective à partir de la position d'équilibre (22).

8. Dispositif selon la revendication 7, **caractérisé en ce que** le dispositif d'affichage graphique (1) est un écran du véhicule à moteur (5) ou un écran d'un dispositif électronique externe.

9. Dispositif selon la revendication 7, **caractérisé en ce qu'**il comprend un moyen de détection de la variation de vitesse (53) à l'intérieur du véhicule à moteur (5) ou à l'intérieur d'un dispositif électronique externe.

10. Dispositif selon la revendication 7, **caractérisé en ce que** le moyen de détection de la variation de vitesse (53) est un système de positionnement du véhicule (5) ou du dispositif électronique externe.
